Europäisches Patentamt

**European Patent Office**

Office européen des brevets

(11) Veröffentlichungsnummer : **0 003 541**
**B1**

(12) **EUROPÄISCHE PATENTSCHRIFT**

(45) Veröffentlichungstag der Patentschrift :
**11.02.81**

(21) Anmeldenummer : **79100242.1**

(22) Anmeldetag : **29.01.79**

(51) Int. Cl.³ : **F 28 F 3/12**, E 04 B 5/48,
E 04 C 2/52

(54) **Grundplatte für eine Heiz- und/oder Kühleinheit.**

(30) Priorität : **07.02.78 DE 2805070**

(43) Veröffentlichungstag der Anmeldung :
**22.08.79 (Patentblatt 79/17)**

(45) Bekanntmachung des Hinweises auf die Patenterteilung : **11.02.81 Patentblatt 81/06**

(84) Benannte Vertragsstaaten :
**BE CH FR GB NL SE**

(56) Entgegenhaltungen :
**DE - A - 2 456 836**
**DE - A - 2 600 922**
**DE - A - 2 641 245**
**FR - A - 2 201 447**

(73) Patentinhaber : **Dier, Irmgard**
**Niederbexbacher-Strasse 31**
**D-6680 Neunkirchen-Kohlhof (DE)**

(72) Erfinder : **Dier, Emil**
**Niederbexbacher-Strasse 31**
**D-6680 Neunkirchen-Kohlhof (DE)**
Erfinder : **Kümmel, Bruno**
**Auf dem Kopf**
**D-6682 Ottweiler (DE)**

(74) Vertreter : **Morbe, Kurt**
**Am Gehlenberg 2**
**D-6602 Saarbrücken-Dudweiler (DE)**

Imprimerie Jouve, 17, rue du Louvre, 75001 Paris, France

Grundplatte für eine Heiz- und/oder Kühleinheit

Die Erfindung betrifft eine Grundplatte für eine Heiz- und/oder Kühleinheit gemäß dem Oberbegriff des Patentanspruchs 1.

Fußboden-, Wand- und Deckenheizungen bzw. -Kühleinheiten sollten so konzipiert sein, daß sie mit größtmöglichem Wirkungsgrad arbeiten und daß ihre Funktionstüchtigkeit über einen langen Zeitraum gewährleistet ist.

Es ist eine mehrteilige Grundplatte mit auf ihrer Oberseite ausgesparten Kanälen zur Aufnahme der schleifenförmig verlaufenden Rohre einer Warmwasserheizung bekannt, die aus Isoliermaterial besteht und bei der die Kanäle zur Aufnahme der Rohre in den Mittelplatten geradlinig oder gewellt, vornehmlich im Abstand der Umlenkkreisbögenradien der Außenplatten verlaufen, und bei der diese Kreisbögen der Außenplatten in einer Flucht nebeneinander so angeordnet sind, daß die geradlinigen Teile der Kanäle auf einer Seiten fluchtend, auf der jeweils benachbarten Seite aber über Anschlußbögen in sie einlaufen. Diese Umlenkkreisbögen liegen in der Höhe ihrer Mittelpunkte eng nebeneinander ohne Trennstege, so daß die Heizungsrohre dort von einer Schleife in die benachbarte übergeführt werden können (DE-A-26 00 922).

Bei dieser Anordnung der Kanäle können die Rohre nicht so eng nebeneinander verlegt werden, wie es oft wünschenswert wäre. Bedenklich ist aber besonders das Fehlen von Freiräumen zur Aufnahme der sich bei Temperaturerhöhungen ergebenden Verlängerungen der Leitungsrohre. Dies wird unweigerlich zur Zerstörung der Heizungsanlage führen.

Auch ist ein Verfahren zur Verlegung einer Heizrohranordnung auf Flächen bekannt, bei dem in der Grundplatte Nuten zur Aufnahme der Heizungsrohre eingelassen sind. Die Kopfstücke dieser Grundplatte besitzen neben geraden und quer dazu verlaufenden Nuten auch bogenförmige Nuten, die jeweils zwei parallel nebeneinander verlaufende Nuten miteinander verbinden (DE-A-2 456 836).

Bei diesem Verfahren ist jedoch keine Lösung dafür angeboten, wie und wo die bei Temperaturänderungen zwangsläufig auftretenden Längenänderungen der Heizungsrohre aufgefangen werden können. Auch ist dabei die oft erforderliche Variabilität der gegenseitigen Heizleitungs-Abstände nicht gegeben. Nach diesem Verfahren können die Leitungen nur von einer Schleife in die unmittelbar benachbarte übergeführt werden. Außerdem sind die parallel zueinander verlaufenden Nutenteile verhältnismäßig weit voneinander entfernt, da an den Umlenkstellen keinerlei Übergangskreisbögen vorgesehen sind, die Umlenkkreisbögen den zulässigen Biegeradius der Heizungsschläuche aber nicht unterschreiten dürfen.

Endlich ist eine rechteckige Platte aus Hartschaum für eine Fußbodenheizung bekannt, die, aufgeteilt in Kopf- und Mittelplatten, mit zur Aufnahme der Heizleitung dienenden Rillen ausgestatt ist. Diese Rillen, die in den Mittelplatten parallel zueinander verlaufen, sind in den Kopfplatten als Umlenkbögen so ausgebildet, daß die, die für die Vorlaufleitungen bestimmt sind, im gleichen Abstand zur Plattenaußenkante miteinander fluchtend verlaufen und die für die Rücklaufleitungen ebenfalls miteinander fluchtend, aber versetzt zur den für die Vorlaufleitungen angeordnet sind (DE-A-2 641 245).

Damit ist festgelegt, daß bei dieser Anordnung jeweils eine Vorlauf- und eine Rücklaufleitung in wechselnder Folge nebeneinander verlegt sind. Die von den Leitungen abgegebene Wärme wird sich demzufolge primär über die Wärmeleitschicht von der wärmeren Vorlauf- zur kälteren Rücklaufleitung ausgleichen, statt wie es sein sollte, nach oben abzustrahlen.

Es ergibt sich also zunächst einmal auf dem zu beheizenden Fußboden eine unerwünschte Welligkeit der Temperaturverteilung und außerdem, aus dem vorgenannten Grund, eine geringere Gesamtwärme. Außerdem ist auch in dieser Schrift keine Lösung aufgezeigt, wie und wo die Längenänderungen der Leitungen aufgenommen werden sollen.

Der Erfindung liegt die Aufgabe zu Grunde, die Grundplatte für eine Heiz- und/oder Kühleinheit so auszubilden, daß die Heiz- und/oder Kühlleitungen besonders eng und variabel verlegt werden können und an geeigneten Stellen eine Ausdehnungsmöglichkeit für die Leitungen gegeben ist. Dabei soll jedoch vermieden werden, daß die hierfür notwendigen Freiräume in der Grundplatte so groß werden, daß sie die Tragfähigkeit der Deckschichten gefährden. Um die Kosten der Fertigung und der Lagerhaltung möglichst gering zu halten, ist anzustreben, mit einer einzigen Plattenart, die alle Kanalformen aufweist, auszukommen.

Diese Aufgabe wurde gelöst durch die Grundplatte für eine Heiz- und/oder Kühleinheit gemäß dem kennzeichnenden Teil des Patentanspruchs 1.

Weitere vorteilhafte Ausgestaltungen der Grundplatte sind im kennzeichnenden Teil der Patentansprüche 2 bis 5 beschrieben.

Die mit der Erfindung erzielten Vorteile bestehen insbesondere darin, daß die Grundplatte für eine Heiz- und/oder Kühleinheit es ermöglicht, durch die Anordnung und Ausgestaltung der auf ihrer Oberseite angeordneten Kanäle, die Heiz- und/oder Kühlleitungen, den örtlichen Erfordernissen entsprechend, in beliebig langen Schleifen und in engeren oder weiteren Abständen zu verlegen, und daß die Leitungen an den hierfür am besten geeigneten Stellen durch ausgesparte Freiräume die Möglichkeit haben, bei temperaturbedingten Verlängerungen schadlos auszuweichen. Diese Freiräume sind nur so groß, daß die Tragfähigkeit der später aufzubringenden Deckschichten nicht gefährdet wird. Dabei sind diese Freiräume in so engen Abständen hintereinander und in einer solche Vielzahl vorgesehen, daß ein Einknicken der Leitungsrohre oder ein unzulässiger Druck auf die Seitenwände der sie engumschließenden Kanäle sicher vermieden wird. Die sowohl mit Umlenkbögen als auch mit geradlinig verlaufenden Kanälen ausgestattete Grundplatte ist universell einsetzbar. Dadurch werden die Kosten der Fertigung und der Lagerhaltung gesenkt sowie Irrtümer bei der Bestellung und der Anlieferung vermieden.

Die Zeichnung erläutert einige Ausführungsbeispiele der Erfindung. Es zeigt :

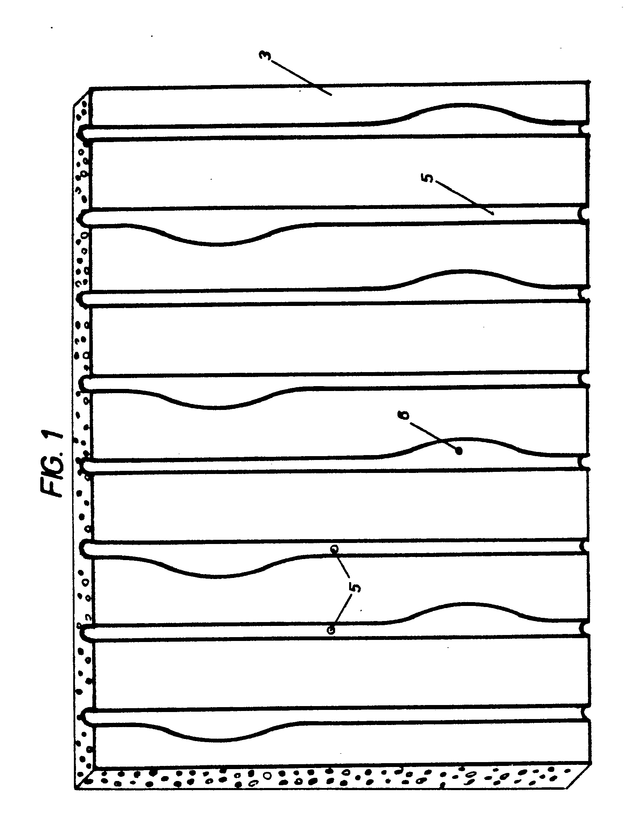

Fig. 1 eine Mittelplatte mit den vornehmlich geradlinig verlaufenden Kanälen und den Freiräumen,

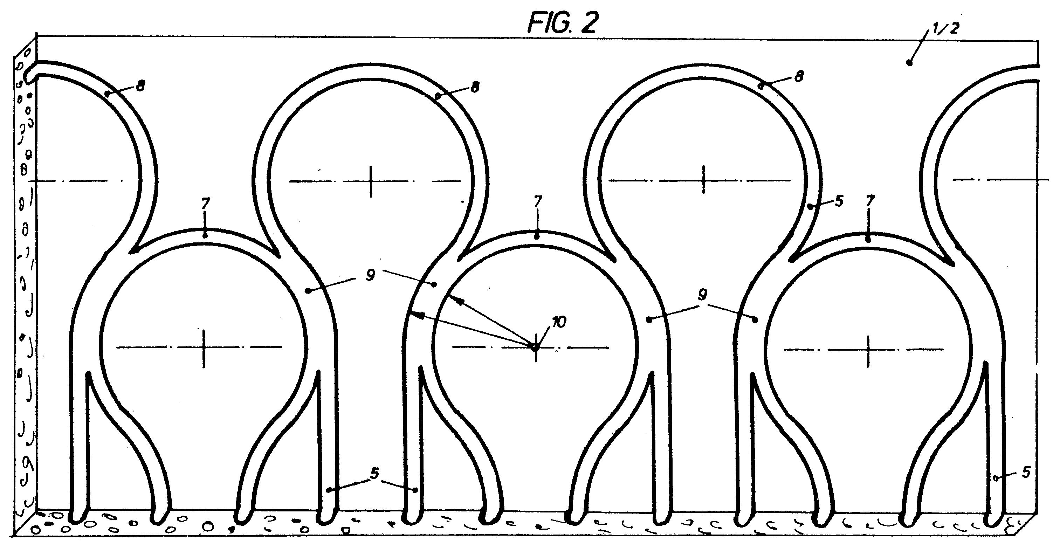

Fig. 2 eine Außenplatte mit den Umlenkbögen für die schleifenförmig verlegte Heiz- und/oder Kühlleitung,

Fig. 3 die Draufsicht einer zusammengesetzten Grundplatte mit verschiedenen Möglichkeiten einer engeren oder weiteren schleifenförmigen Leitungsverlegung, und

Fig. 4 die Draufsicht einer Grundplatte, welche sowohl Umlenkbögen als auch geradlinig verlaufende Kanäle aufweist.

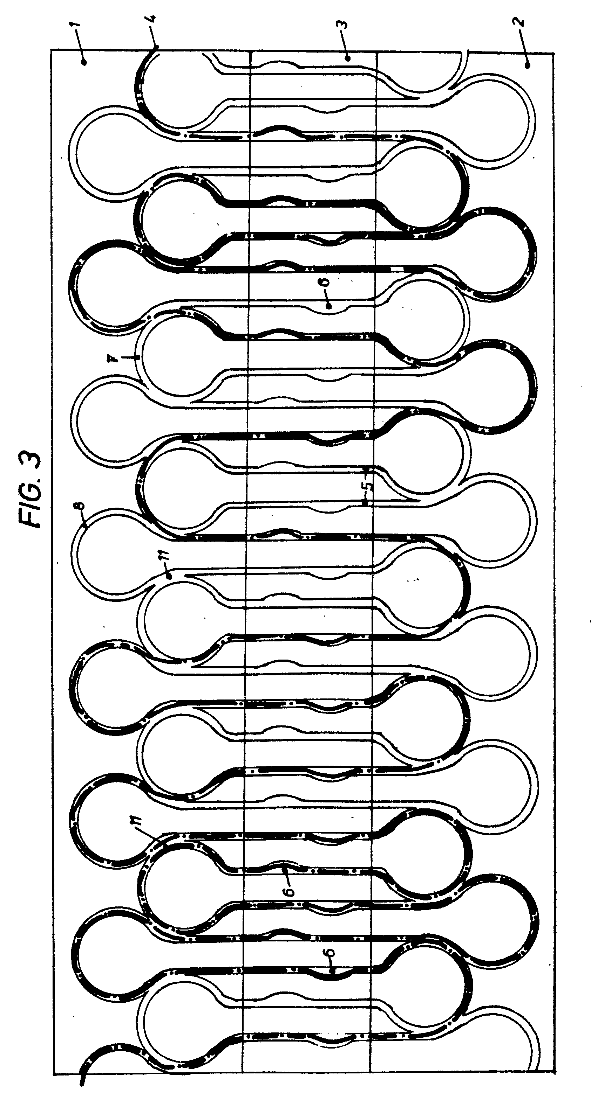

Die mehrteilige Grundplatte für eine Heiz- und/oder Kühleinheit besteht, je nach der Größe der zu temperierenden Fläche, wie in Fig. 3 dargestellt, zum wenigsten aus zwei Außenplatten 1, 2 und einer oder mehreren dazwischen angeordneten Mittelplatten 3, die so aneinander gefügt sind, daß die auf ihren Oberflächen ausgesparten, die Heiz- und/oder Kühlleitungen 4 eng umschliessenden Kanäle 5 fluchtend ineinander laufen. Dabei sind die Kanäle in den Mittelplatten 3 vornehmlich geradlinig und parallel im gleichen Abstand zueinander verlaufend angeordnet. Sie weisen in Abständen, die abhängig sind von der maximalen Vorlauftemperatur und dem Ausdehnungskoeffizienten des für die Heizleitung verwendeten Materials, vornehmlich kreisabschnittsförmige Freiräume 6 auf, in die die Heizleitung bei temperaturbedingten Verlängerungen abschnittsweise ausweichen kann. Bei Heizleitungen aus Kunststoff sollten diese Freiräume beispielsweise in Abständen von jeweils einem Meter mit einer Größe von ca. 22 mm breiten Kreisabschnitten vorgesehen werden.

Die kreisbogenförmigen Kanäle 5 der Außenplatten 1, 2 dienen der schleifenförmig verlegten Heiz- und/oder Kühlleitung 4 als Umlenkstellen. Damit die Leitungen 4 möglichst eng verlegt werden können, sind die Umlenkbögen 7, 8, bezogen auf die Querachse der Leitungsschleife, in wechselnder Folge versetzt zueinander angeordnet. Im Interesse einer großen Variabilität der Leitungsführung sind die Umlenkbögen 7, 8 um ein solches Maß zueinander versetzt, daß die Übergangsbögen 9 der äußeren Umlenkbögen mit den jeweils benachbarten Umlenkbögen 7 denselben Mittelpunkt 10 haben und an ihnen unmittelbar und ohne Trennsteg anliegen. Die den äußeren Umlenkbögen 8 zugeordneten geradlinigen Kanäle 5 laufen demzufolge tangential an die inneren Umlenkbögen 7 an, und die Durchmesser der inneren und der äußeren Umlenkbögen 7 bzw. 8 sind gleich groß. Auch die geradlinigen Kanäle 5 haben immer den gleichen Abstand zueinander. An den Berührungsstellen 11 der Kanäle 5 können die Leitungen 4, wie in Fig. 3 dargestellt, in verschiedenen Formen mit einem engeren oder weiteren Abstand zueinander in die benachbarten Schleifen überführt werden.

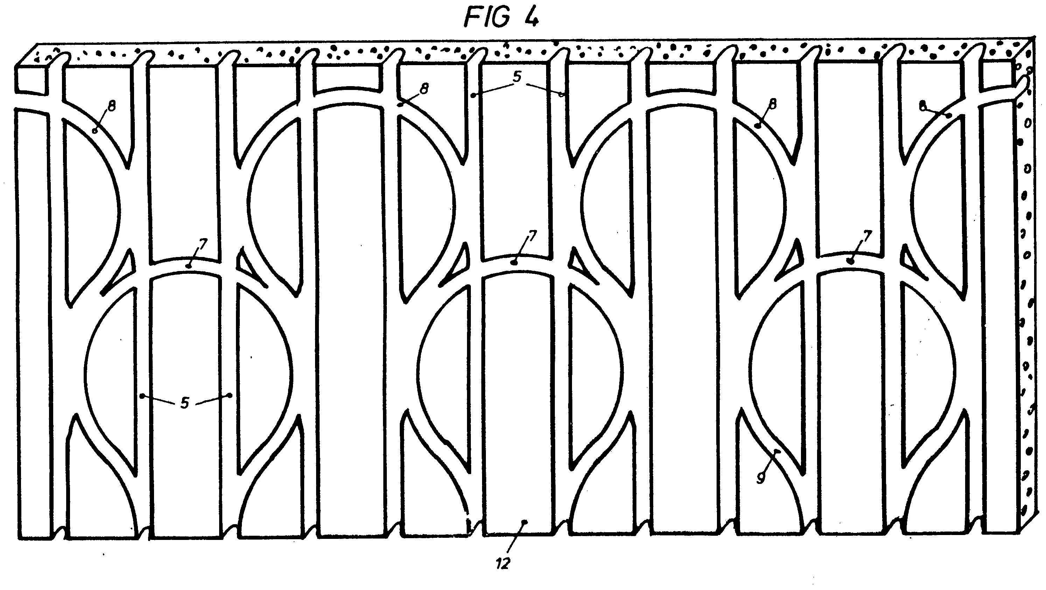

Eine besonders vorteilhafte, weil universell einzetzbare Form der erfindungsgemäßen Grundplatte ist in Fig. 4 dargestellt. Diese Grundplatte 12 ist sowohl mit geradlinig verlaufenden Kanälen 5 als auch mit Umlenkbögen 9 ausgestattet. Auch bei dieser Grundplatte können die Heiz- und/oder Kühlleitungen 4 in engeren oder weiteren Schleifen von beliebiger Länge verlegt werden. Selbstverständlich können auch hier die Kanäle 5 mit zusätzlichen Freiräumen zur abschnittsweisen Aufnahme der sich dehnenden Heizleitung versehen werden. In den meisten Fällen wird sie bei dieser Grundplatte jedoch kaum erforderlich sein, weil an den Stellen, wo bei dieser Platte die geradlinigen Kanäle 5 die Umlenkbögen 7, 8 tangieren, bereits genügend Freiräume gegeben sind.

Für alle Grundplatten gilt, daß die Kanäle 5 und/oder die Bögen 7, 8, 9, die nicht mit Leitungen 4 belegt sind, mit einem möglichst gut wärmeleitenden Material verfüllt sind.

## Ansprüche

1. Grundplatte (1, 2, 3) für eine Heiz- und/oder Kühleinheit zum Einbau in Decken, Fußböden und Wände, mit auf ihrer Oberseite ausgesparten Kanälen (5) zur Aufnahme der schleifenförmig verlaufenden Heiz- und/oder Kühlleitung, die an den Umlenkstellen gleich große Kreisbögen (7, 8) von mehr als 180 Grad beschreiben und dazwischen geradlinig parallel zueinander verlaufen, wobei zwischen den geradlinigen Teilen und den Kreisbögen (7, 8) wenigstens einseitig Übergangskreisbögen (9) angeordnet sind, die die jeweils benachbarten Umlenkkreisbögen (7, 8) berühren, und wobei an den Berührungsstellen (11) trennstegfreie Übergänge für die Heiz- und/oder Kühlleitungsschleifen vorgesehen sind, dadurch gekennzeichnet, daß die gleichgroßen Umlenkkreisbögen (7, 8) nach außen bzw. innen zueinander versetzt sind und sich an ihrem Umfang gegenseitig berühren, und daß in den geradlinigen Teilen der die Heiz- und/oder Kühlleitungen (4) eng umfassenden Kanäle (5) Freiräume (6) zur Aufnahme der temperaturbedingten Verlängerungen dieser Leitung vorgesehen sind.

2. Grundplatte nach Anspruch 1, dadurch gekennzeichnet, daß bei einer Ausführung, welche die geradlinig parallel zueinander verlaufenden Kanalteile (5) und die Umlenk- sowie Übergangskreisbögen (7, 8, 9) in einem Stück aufweist, die geradlinigen Kanalteile (5) über die Umlenkkreisbögen (7, 8) hinaus bis an die Seitenkante der Grundplatte verlaufen und dort wo sie die Umlenkkreisbögen (7, 8) tangieren, in diese mündende trennstegfreie Übergänge (11) aufweisen.

3. Grundplatte nach Anspruch 1 oder 2, dadurch gekennzeichnet, daß die Übergangskreisbögen (9) der äußeren Umlenkkreisbögen (8) mit den jeweils benachbarten inneren Umlenkkreisbögen (7) denselben Mittelpunkt (10) haben, daß die den äußeren Umlenkkreisbögen (8) zugeordneten geradlinigen Kanalteile (5) knickfrei in diese inneren Umlenkkreisbögen (7) einlaufen und die gegenseitigen Abstände der geradlinigen Kanalteile (5) gleich groß sind.

4. Grundplatte nach einem der Ansprüche 1 bis 3, dadurch gekennzeichnet, daß die Freiräume (6) in den geradlinigen Kanalteilen (5) für die Heizungsrohre aus Kunststoff (4) einen Abstand von vorzugsweise einem Meter zueinander und bei einer kreisabschnittsförmigen Grundfläche eine Breite von etwa 22 mm aufweisen.

5. Grundplatte nach einem der Ansprüche 1 bis 4, dadurch gekennzeichnet, daß die von Heizund/oder Kühlleitungen (4) freibleibenden Kanäle (5), Umlenkkreisbögen (7, 8), Übergangskreisbögen (9) und Freiräume (6) mit einem gut wärmeleitenden Material verfüllt sind.

### Claims

1. Base plate (1, 2, 3) for a heating and/or cooling system for installation in ceilings, floors and walls with channels (5) recessed on its surface for receiving the looped heating and/or cooling pipes, which describe, at the turning points, equally large circular arcs (7, 8) of more than 180 degrees and in between run straight and parallel to each other, with transition arcs of circle (9) arranged at least on one side between the straight parts and the circular arcs (7, 8) and contacting the respective adjoining turning arcs of circle (7, 8), and with transitions free from parting webs provided at the points of contact (11) for the heating and/or cooling pipe loops, characterized by the fact that the equally large turning arcs of circle (7, 8) are staggered outwards and inwards respectively and contact each other at their peripheries and that expansion chambers (6) for receiving the temperature-conditioned elongations of the heating and/or cooling pipes (4) are provided in the straight parts of the channels (5) which tightly enclose the heating and/or cooling pipes (4).

2. Base plate according to claim 1, characterized by the fact that in a construction where the parallel running straight channel parts (5) and the turning as well as transition arcs of circle (7, 8, 9) are all arranged on one plate, the straight channel parts (5) run beyond the turning arcs (7, 8) as far as the edge of the base plate and have transitions (11) free from parting webs running into the turning arcs of circle (7, 8) at the points where they are tangent to the latter.

3. Base plate according to claim 1 or 2, characterized by the fact that the transition arcs of circle (9) of the outer turning arcs of circle (8) have the same centres (10) as the adjoining inner turning arcs of circle (7), that the straight channel parts (5) pertaining to the outer turning arcs of circle (8) run buckle-free into these inner turning arcs of circle (7) and that the distance between the straight channel parts (5) are equal.

4. Base plate according to one of the claims 1 to 3, characterized by the fact that the expansion chambers (6) in the straight channel parts (5) for the plastic heating pipes (4) are preferably located at a distance of one metre from each other and have a width of approximately 22 mm with a base surface in the form of a circular segment.

5. Base plate according to one of the claims 1 to 4, characterized by the fact that the channels (5), the turning arcs of circle (7, 8), the transition arcs of circle (9) and the expansion chambers (6) which remain free from heating and/or cooling pipes (4) are filled with a material of great heatconducting capacity.

### Revendications

1. Plaque de base (1, 2, 3) pour une unité de chauffage et/ou de refroidissement à incorporer dans les plafonds, les sols et les murs, avec sur sa face supérieure des canaux évidés (5), destinés à recevoir la conduite de chauffage et/ou de refroidissement bouclée, qui décrivent au niveau des boucles des arcs de cercle (7, 8) de même grandeur, de plus de 180 degrés, et suivent un tracé parallèle et rectiligne entre ceux-ci, des arcs intermédiaires (9) contigus aux boucles (7, 8) voisines étant disposés au minimum sur un côté entre les portions rectilignes et les boucles (7, 8), et des passage dépourvus d'éléments de séparation étant prévus au niveau des points de contact (11) pour les boucles de chauffage et/ou de refroidissement, caractérisée en ce que les boucles (7, 8), de grandeur identique, sont décalées les unes par rapport aux autres vers l'extérieur ou l'intérieur, et que, dans les portions rectilignes des canaux (5) où sont enserrées les conduites de chauffage et/ou de refroidissement (4), des espaces libres (6) sont prévus pour la réception des poches de dilatation de cette conduite.

2. Plaque de base conçue suivant la revendication 1 et caractérisée en ce que, sur une exécution présentant les portions rectilignes et parallèles des canaux (5) et les boucles ainsi que les arcs intermédiaires (7, 8, 9) d'un seul tenant, les portions rectilignes des canaux (5) vont au-delà des boucles (7, 8) jusqu'au bord latéral de la plaque de base et présentent, là où elles sont tangentes aux boucles (7, 8), des passages (11) qui y débouchent et sont dépourvus d'éléments de séparation.

3. Plaque de base conçue suivant la revendication 1 ou 2 et caractérisée en ce que les arcs intermédiaires (9) des boucles extérieures (8) ont un centre (10) qui coïncide avec celui des boucles intérieures voisines (7), que les portions rectilignes des canaux (5) adjointes aux boucles extérieures (8) parviennent sans coude dans ces boucles intérieures (7) et que les écarts entre les diverses portions rectilignes des canaux (5) sont identiques.

4. Plaque de base conçue suivant l'une des revendications 1 à 3 et caractérisée en ce que les espaces libres (6) des portions rectilignes des canaux (5), prévus pour les tubes de chauffage en matière plastique (4), présentent de préférence des écarts réciproques d'un mètre et une largeur d'env. 22 mm pour une surface en forme de segment de cercle.

5. Plaque de base conçue suivant l'une des revendications 1 à 4 et caractérisée en ce que les canaux (5), boucles (7, 8), arcs intermédiaires (9) et espaces libres (6) dépourvus de conduites de chauffage et/ou de refroidissement (4) sont emplis d'un matériau présentant de bonnes propriétés thermoconductrices.

FIG. 1

1/4

FIG. 2

0 003 541

2/4

FIG. 3

FIG 4

4